Europäisches Patentamt

European Patent Office

Office européen des brevets

(19)

(11) Publication number: **0 402 475 A1**

## (12) EUROPEAN PATENT APPLICATION
## published in accordance with Art. 158(3) EPC

(21) Application number: **90900321.2**

(22) Date of filing: **08.12.89**

(86) International application number:
**PCT/JP89/01235**

(87) International publication number:
**WO 90/07748 (12.07.90 90/16)**

(51) Int. Cl.⁵: **G06F  15/60**

(30) Priority: **24.12.88 JP 324794/88**

(43) Date of publication of application:
**19.12.90 Bulletin  90/51**

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **SEKI, Masaki**
**3-15-2-406, Takaidonishi Suginami-ku**
**Tokyo 168(JP)**
Inventor: **HAYANAGI, Shizuaki FANUC**
**Dai3virakaramatsu**
**3527-1,Shibokusa, Oshino-mura**
**Minamitsuru-gun Yamanashi, 401-05(JP)**
Inventor: **SUZUKI, Koji Fanuc Dai-3**
**Vira-karamatsu**
**3527-1, Shibokusa Oshino-mura**
**Minamitsuru-gun**
**Yamanashi 401-05(JP)**
Inventor: **HOSONO, Takeshi Room 8-307,**
**Fanuc Manshonharimomi**
**3511-1, Shibokusa Oshino-mura**
**Minamitsuru-gun**
**Yamanashi 401-05(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) METHOD OF DETERMINING EXPANDED SHAPE OF A PRODUCT IN A CAD SYSTEM.

(57) A method of determining expanded shape of a product to easily and correctly find the expanded shape of a product produced by bending using a CAD system. As an operator manipulates a tablet device to form first and second projection drawings on two planes that are in parallel with the outer surfaces of first and second portions of an L-shaped product on both sides of, for example, a bending line, the processor draws (S1) the first and second projection drawings on the display screen according

to shape data that define the two projection drawings, calculates (S5) the distances for moving the second projection drawing in the X-axis and Y-axis directions as well as the angle of rotation in order to bring the two vertexes of each of the projection drawings in agreement with each other depending upon the pick inputs (S2, S3) of two vertexes on the side of the bending line of the projection drawings drawn by the operator via the tablet device, produces the shape data that represent the shape of the product after bent and expanded based upon the calculated values, thickness of the plate, and the amounts of expansion and contraction of the material of the product caused by bending as calculated depending upon the input data that represent the bending angle and bending direction, and draws (S7) the expanded shape of the product on the display screen.

FIG.2

START

DISPLAY 1ST & 2ND PROJECTION DRAWINGS F1 & F2 — S1

STORE RAM WITH COORDINATE POSITIONS OF 1ST & 2ND POINTS P1, P2 — S2

STORE RAM WITH COORDINATE POSITIONS OF 3RD & 4TH POINTS P3, P4 — S3

STORE RAM WITH DATA ON THICKNESS, BENDING ANGLE & BENDING DIRECTION — S4

CALCULATE PATTERN TRANSFORMATION DATA ON 2ND PROJECTION DRAWING F2 — S5

CALCULATE DATA INDICATIVE OF EXTERNAL SHAPE F2' AFTER BENDING DEVELOPMENT OF SECOND PRODUCT PORTION — S6

CALCULATE DATA INDICATIVE OF DEVELOPED PRODUCT SHAPE F0 AND DISPLAY DEVELOPED SHAPE — S7

E N D

2

## S P E C I F I C A T I O N
### DEVELOPED PRODUCT SHAPE DECIDING METHOD
### FOR A COMPUTER-AIDED DESIGN SYSTEM

### Technical Field

The present invention relates to a method for deciding the developed shape of a product to be manufactured by bending, and more particularly, to a method of this kind capable of easily accurately obtaining the developed product shape by means of a computer-aided design system.

### Background Art

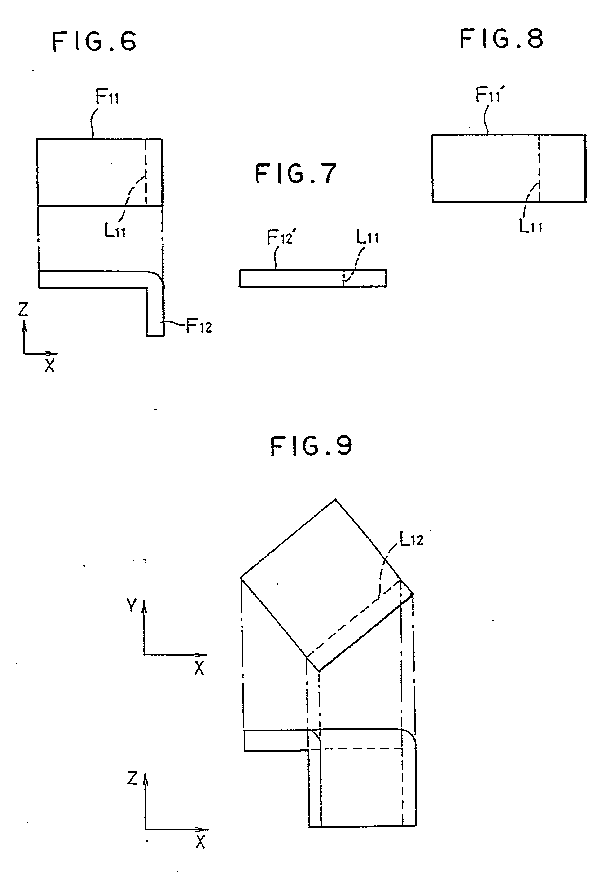

As is generally known, the developed shape or pre-bending plane shape of a product manufactured by plate bending, e.g., a pressed product, can be obtained by developing projection drawings of the product on two or three planes, including a plane perpendicular to a bending line, on a graphic display screen of a computer-aided design system. In the case of a product with an L-shaped cross section, for example, a developed pattern F12' (Fig. 7) on an XZ plane, perpendicular to a bending line 11 and displayed on the display screen, is obtained by developing a projection drawing F12 (Fig. 6) of the product on the XZ plane along the bending line L11. Then, a developed product shape F11' (Fig. 8) is obtained by developing a projection drawing F11 on an XY plane so as to be in alignment with the developed pattern F12'.

Thus, in the conventional method of bending development, it is necessary to prepare the developed pattern by developing the projection drawing on the plane perpendicular to the bending line, and further to prepare the developed product shape on another plane on the basis of the developed pattern, which requires a troublesome work. According to the conventional

- 2 -

method, moreover, it is difficult to execute an accurate bending development along a bending line L12 (Fig. 9) which is not parallel to a coordinate axis, e.g., X- or Y-axis, of a display coordinate system (coordinate system for projection drawing preparation), and the developed shape is liable to errors. In such a case, an operator used to modify the developed shape.

### Disclosure of the Invention

The object of the present invention is to provide a developed product shape deciding method for a computer-aided design system, which can easily accurately obtain the developed shape of a product to be manufactured by bending.

In order to achieve the above object, a developed product shape deciding method for a computer-aided design system, according to the present invention, comprises the steps of: (a) preparing a projection drawing of a product manufactured by bending on a plane parallel to a face of a one-side portion of the product with respect to a bending line; (b) preparing a projection drawing of the product on a plane parallel to a face of the other-side portion of the product with respect to the bending line; (c) calculating a relative movement of the two projection drawings required for alignment of two points on an outline of the projection drawing prepared in said step (a) on the side of the bending line with corresponding two points on the projection drawing prepared in said step (b); and (d) deciding the developed shape of the product on the basis of the relative movement.

According to the developed product shape deciding method, as described above, it is necessary only that the projection drawings on the planes parallel to the faces of the product portions on either side of the bending line, individually, be prepared, so that a projection drawing on a plane perpendicular to the bending line need not always be prepared, that is, the preparation of the projection drawings is easy. Further, the developed product shape is decided on the basis of the calculated relative movement of the two projection drawings required for the alignment of the two points on the outline of the product on the side of the bending line with the two points associated therewith. It is unnecessary, therefore, to decide the developed product shape on one projection drawing on the basis of a developed pattern obtained by bending another projection drawing, which is a troublesome work liable to errors. Thus, even if the bending line is parallel to neither of the coordinate axes, the developed product shape can be decided easily and accurately.

Brief Description of the Drawings

Fig. 1 is a schematic block diagram showing a computer-aided design system to which is applied a method according to one embodiment of the present invention;

Fig. 2 is a flow chart illustrating a developed shape deciding process executed by the system of Fig. 1;

Fig. 3 is a diagram showing a projection drawing displayed on a display screen of the system of Fig. 1;

Fig. 4 is a diagram similar to Fig. 3, showing another projection drawing;

Fig. 5 is a diagram showing a developed product shape;

Fig. 6 is a diagram showing a projection drawing according to a conventional method;

Fig. 7 is a diagram showing a developed pattern

- 4 -

prepared by the conventional method on the basis of the projection drawing of Fig. 6;

Fig. 8 is a diagram showing a developed product shape prepared by the conventional method on the basis of the developed pattern of Fig. 7; and

Fig. 9 is a diagram showing a projection drawing obtained when a bending line is parallel to neither of the X- and Y-axes.

Best Mode of Carrying Out the Invention

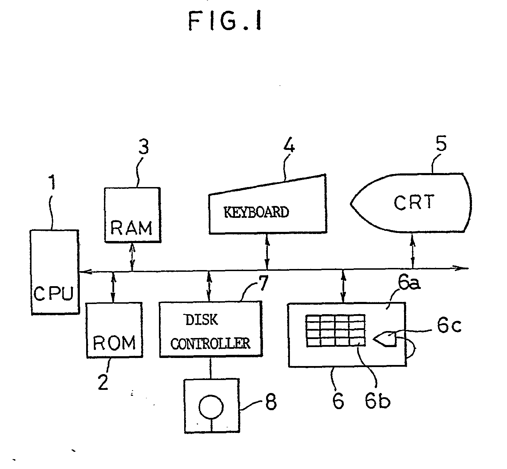

Referring to Fig. 1, a computer-aided design (CAD) system, to which is applied a method according to one embodiment of the present invention, comprises a processor (CPU) 1, a read-only memory (ROM) 2 stored with a program for controlling the CAD system, a random access memory (RAM) 3 for storing product shape data, a keyboard 4, a graphic display unit (CRT) 5, a tablet unit 6, a disk controller 7, and a floppy disk drive unit 8 connected to the controller 7. These elements 1 to 7 are connected to the CPU 1 by means of busses 9.

The tablet unit 6 is provided with a tablet cursor 6c for picking various items in a menu 6b displayed on a tablet panel 6a so that an operator can operate the tablet cursor 6c to pick required items, that is, the operator is allowed to input data. A graphic cursor of the CRT 5 is movable on the screen of the CRT in association with the tablet cursor 6c, so that the operator can locate the graphic cursor in a required position on the CRT screen by means of the tablet unit 6, and pick this position.

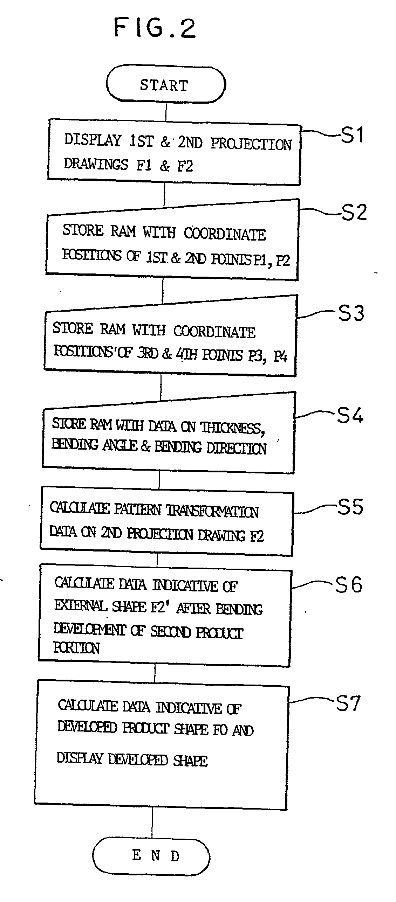

Referring now to Figs. 2 to 5, the operation of the aforesaid CAD system will be described in connection with a case in which the developed shape of a product with an L-shaped cross section manufactured

- 5 -

by bending is obtained. In the description to follow, a one-side portion of the L-shaped product, with respect to a bending line, will be referred to as a first portion, while the other-side portion will be referred to as a second portion.

The operator operates the tablet unit 6, thereby preparing two projection drawings (hereinafter referred to as first and second projection drawings F1 and F2) of the L-shaped product on two planes parallel to the outer flat surfaces of the first and second portions of the product, that is, two plan views taken individually in the directions (one of which is indicated by arrow A) of the respective normal lines of the outer surfaces of the first and second portions. Both these projection drawings F1 and F2 can be prepared more easily than a projection drawing (corresponding to a projection drawing F12 of Fig. 6) on a plane perpendicular to the bending line. If the projection drawings F1 and F2 are already prepared, the operator loads the floppy disk drive unit 8 with a floppy disk stored with shape data defining both these projection drawings.

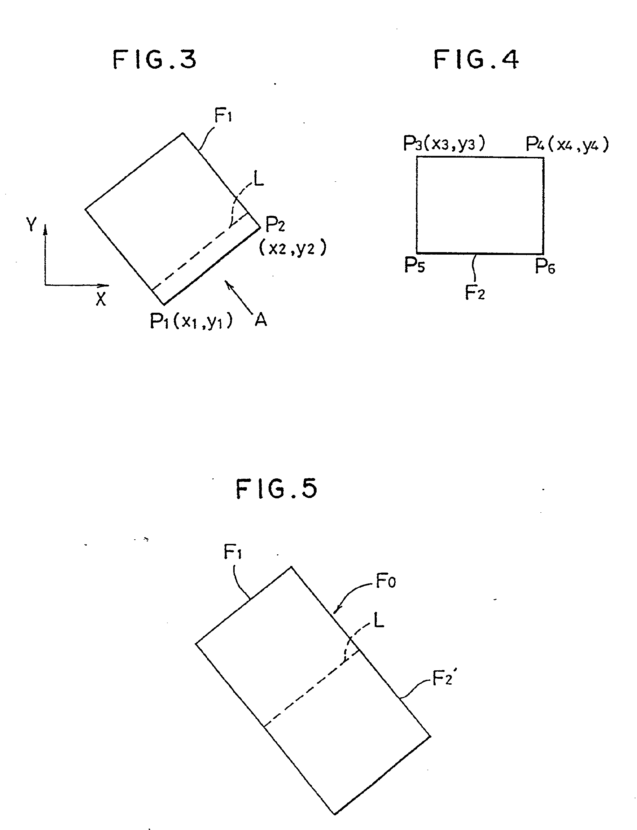

In response to the preparation of the first and second projection drawings F1 and F2 or the setting of the floppy disk, the CPU 1 stores the shape data defining the projection drawings F1 and F2 in the RAM 3. Then, the CPU 1 causes the first and second projection drawings F1 and F2 to be displayed individually on the screen of the CRT 5 in accordance with the shape data, as shown in Figs. 3 and 4 (Step S1).

Then, the operator operates the tablet unit 6 to locate the graphic cursor, movable on the screen of the CRT 5 in association with the tablet cursor 6c, at one

- 6 -

end (first point) P1 of an outline of the first projection drawing F1 on the side of the bending line L, that is, at one vertex of the rectangular projection drawing F1, thereby picking the point P1. The other end (second point) P2 is picked in like manner. In response to the picking of the first and second points P1 and P2, coordinate positions (x1, y1) and (x2, y2) in a coordinate system set on the CRT screen, indicative of the respective positions of the points P1 and P2 on the CRT screen, are stored in the RAM 3. Subsequently, when third and fourth points P3 and P4, which correspond individually to the opposite ends of an outline of the second projection drawing F2 on the side of the bending line L, are picked in the order named and in the same manner as the points P1 and P2, the respective coordinate positions (x3, y3) and (x4, y4) of the third and fourth points P3 and P4 are stored in the RAM 3 (Step S3). When the thickness, bending angle, and bending direction of the L-shaped product are inputted by the operator's operation, moreover, these data are stored in the RAM 3 (Step S4).

The CPU 1 calculates distances $\Delta x$ and $\Delta y$ of movement of the second projection drawing F2 in the X- and Y-axis directions, required for the alignment of the third point P3 with the first point P1, according to the following equations (1) and (2) (Step S5):

$$\Delta x = x3 - x1 \qquad --- (1)$$
$$\Delta y = y3 - y1 \qquad --- (2)$$

The coordinate position P4'(x4', y4') of the fourth point P4 of the projection drawing F2 after a parallel movement of the second projection drawing F2 based on the calculated distances $\Delta x$ and $\Delta y$ is given by the following equations (3) and (4):

$$x4' = x4 - \Delta x \qquad --- (3)$$

- 7 -

$$y4' = y4 - \Delta y \qquad\qquad --- (4)$$

If the rotational angle of the second projection drawing F2 required for the alignment of the coordinate position P4' of the fourth point after the aforesaid parallel movement with the second point is $\theta$, the following equation (5) holds:

$$\begin{bmatrix} x2 \\ y2 \end{bmatrix} = \begin{bmatrix} \cos\theta & -\sin\theta \\ \sin\theta & \cos\theta \end{bmatrix} \begin{bmatrix} x4' \\ y4' \end{bmatrix}$$

$$--- (5)$$

If the coordinate positions before the parallel movement and rotatory movement of the second projection drawing F2, based on the distance $\Delta x$ and $\Delta y$ of movement and the rotational angle $\theta$, are xi and yi, respectively, X- and Y-axis direction coordinate positions Xi and Yi (i = 5, 6) of the two other vertexes, i.e., fifth and sixth points P5 and P6, of the projection drawing F2 after pattern transformation including the parallel and rotatory movements are given by the following equations (6) and (7):

$$Xi = xi \cdot \cos\theta - yi \cdot \sin\theta - \Delta x \qquad --- (6)$$
$$Yi = xi \cdot \sin\theta + yi \cdot \cos\theta - \Delta y \qquad --- (7)$$

Thereupon, in Step S5, the CPU 1 further calculates the rotational angle $\theta$ for aligning the fourth point with the second point and the coordinate positions of the fifth and sixth points P5 and P6 after the pattern transformation, according to equations (5) to (7).

Then, the CPU 1 calculates the amount of expansion or contraction of the product material accompanying the bending work, in accordance with input data indicative of the bending angle and the bending direction. In consideration of this calculated amount of expansion or contraction and on the basis of the calculated coordinate positions of the third to sixth points P3 to

- 8 -

P6 of the second projection drawing F2 after the pattern transformation of the projection drawing F2, moreover, the CPU 1 calculates shape data indicative of an external shape F2' after the bending development of the second portion of the product (Step S6). Subsequently, the CPU 1 prepares shape data indicative of a product shape (developed product shape) F0 after the bending development on the basis of the shape data indicative of the first projection drawing F1 and the shape data indicative of the shape F2', and the CRT 5 displays the developed product shape F0 on the CRT screen in accordance with the prepared shape data, and also displays the bending line L in broken line so that the operator can discriminate it from the developed product shape F0 (Step S7).

The present invention is not limited to the embodiment described above, and various modifications may be effected therein.

In the above embodiment, for example, the opposite ends P1 to P4 of the outlines of the first and second projection drawings on the bending-line side are picked. Alternatively, however, two points on the outline of the first projection drawing on the bending-line side and their corresponding two points on the second projection drawing may be picked. Further, two outlines to be aligned by pattern transformation may be simply specified. In this case, the coordinate positions of two sets of points on the two outlines are determined in accordance with projection drawing display data stored in the RAM 3.

Although the product with an L-shaped cross section has been described in connection with the above embodiment, furthermore, the present invention may be applied to products in various shapes.

- 9 -

# C L A I M S

1. A developed product shape deciding method for a computer-aided design system, comprising steps of:

(a) preparing a projection drawing of a product manufactured by bending on a plane parallel to a face of a one-side portion of said product with respect to a bending line;

(b) preparing a projection drawing of said product on a plane parallel to a face of the other-side portion of said product with respect to said bending line;

(c) calculating a relative movement of said two projection drawings required for alignment of two points on an outline of said projection drawing prepared in said step (a) on the side of said bending line with corresponding two points on said projection drawing prepared in said step (b); and

(d) deciding the developed shape of said product on the basis of said relative movement.

2. A developed product shape deciding method for a computer-aided design system according to claim 1, wherein movement of one of said projection drawings relative to the other of said projection drawings si calculated in said step (c).

3. A developed product shape deciding method for a computer-aided design system according to claim 2, wherein said projection drawings are prepared by using a two-dimensional coordinate system, and said movement includes the rotational angle of said one projection drawing relative to said the other projection drawing and distances of parallel movement in the directions of the individual coordinate axes of said two-dimensional coordinate system.

4. A developed product shape deciding method for a computer-aided design system according to claim 1,

- 10 -

further comprising a step of displaying both said projection drawings and said developed product shape on a graphic display screen of said computer-aided design system.

5. A developed product shape deciding method for a computer-aided design system according to claim 4, wherein said bending line is displayed discriminatively from said developed product shape in said displaying step.

6. A developed product shape deciding method for a computer-aided design system according to claim 1, wherein the two points on the outline of each said projection drawing are the opposite ends of said outline, individually.

FIG.1

# F I G . 2

```
          ┌─────────────┐
          │    START    │
          └──────┬──────┘
                 │
   ┌─────────────────────────┐
   │ DISPLAY 1ST & 2ND       │──── S1
   │ PROJECTION DRAWINGS      │
   │ F1 & F2                  │
   └─────────────┬───────────┘
                 │
   ┌─────────────────────────┐
   │ STORE RAM WITH           │──── S2
   │ COORDINATE POSITIONS     │
   │ OF 1ST & 2ND POINTS      │
   │ P1, P2                   │
   └─────────────┬───────────┘
                 │
   ┌─────────────────────────┐
   │ STORE RAM WITH           │──── S3
   │ COORDINATE POSITIONS     │
   │ OF 3RD & 4TH POINTS      │
   │ P3, P4                   │
   └─────────────┬───────────┘
                 │
   ┌─────────────────────────┐
   │ STORE RAM WITH DATA ON   │──── S4
   │ THICKNESS, BENDING       │
   │ ANGLE & BENDING          │
   │ DIRECTION                │
   └─────────────┬───────────┘
                 │
   ┌─────────────────────────┐
   │ CALCULATE PATTERN        │──── S5
   │ TRANSFORMATION DATA ON   │
   │ 2ND PROJECTION DRAWING   │
   │ F2                       │
   └─────────────┬───────────┘
                 │
   ┌─────────────────────────┐
   │ CALCULATE DATA           │──── S6
   │ INDICATIVE OF EXTERNAL   │
   │ SHAPE F2' AFTER BENDING  │
   │ DEVELOPMENT OF SECOND    │
   │ PRODUCT PORTION          │
   └─────────────┬───────────┘
                 │
   ┌─────────────────────────┐
   │ CALCULATE DATA           │──── S7
   │ INDICATIVE OF DEVELOPED  │
   │ PRODUCT SHAPE F0 AND     │
   │ DISPLAY DEVELOPED SHAPE  │
   └─────────────┬───────────┘
                 │
          ┌─────────────┐
          │    E N D    │
          └─────────────┘
```

# FIG.3

# FIG.4

# FIG.5

FIG.6

FIG.8

FIG.7

FIG.9

# INTERNATIONAL SEARCH REPORT

International Application No  PCT/JP89/01235

## I. CLASSIFICATION OF SUBJECT MATTER (if several classification symbols apply, indicate all) 6

According to International Patent Classification (IPC) or to both National Classification and IPC

Int. Cl$^5$     G06F15/60

## II. FIELDS SEARCHED

### Minimum Documentation Searched 7

| Classification System | Classification Symbols |
|---|---|
| IPC | G06F15/60 |

### Documentation Searched other than Minimum Documentation to the Extent that such Documents are Included in the Fields Searched 8

| | |
|---|---|
| Jitsuyo Shinan Koho | 1926 – 1989 |
| Kokai Jitsuyo Shinan Koho | 1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 62-131374 (NEC Corporation), 13 June 1987 (13. 06. 87), Fig. 2 (Family: none) | 1 |
| A | JP, A, 63-140373 (Oki Electric Industry Co., Ltd.), 11 June 1988 (11. 06. 88), Fig. 2 (Family: none) | 1 |
| A | JP, A, 63-146166 (Amada Co., Ltd.), 18 June 1988 (18. 06. 88), Fig. 1 (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 24, 1990 (24. 01. 90) | February 13, 1990 (13. 02. 90) |

| International Searching Authority | Signature of Authorized Officer |
|---|---|
| Japanese Patent Office | |

Form PCT/ISA/210 (second sheet) (January 1985)